# EUROPÄISCHE PATENTSCHRIFT

(11) **EP 3 822 527 B1**
(45) Veröffentlichungstag und Bekanntmachung des Hinweises auf die Patenterteilung: **15.02.2023**
(21) Anmeldenummer: 20207035.5
(22) Anmeldetag: 11.11.2020
(51) Int. Cl.: F16K 27/02, F16K 31/06, F02M 63/00

(54) **ELEKTROMAGNETVENTIL UND VERFAHREN ZUR HERSTELLUNG EINES ELEKTROMAGNETVENTILS**
SOLENOID VALVE AND METHOD FOR PRODUCING A SOLENOID VALVE
SOUPAPE ÉLECTROMAGNÉTIQUE ET PROCÉDÉ DE FABRICATION D'UNE SOUPAPE ÉLECTROMAGNÉTIQUE

(30) Priorität: 13.11.2019 DE 102019130672
(43) Veröffentlichungstag der Anmeldung: 19.05.2021
(73) Patentinhaber: SVM Schultz Verwaltungs-GmbH & Co. KG, 87700 Memmingen (DE)
(72) Erfinder: Hasel, Claus Peter, 87700 Memmingen (DE); Weiß, Bernhard, 87737 Boos (DE)
(74) Vertreter: Patentanwälte Olbricht, Buchhold, Keulertz Partnerschaft mbB

(56) Entgegenhaltungen:
- DE-A1-102008 003 212
- DE-A1-102013 015 481
- DE-A1-102014 004 796
- DE-A1-102016 202 945
- DE-A1-102016 220 364
- DE-A1-102018 107 053
- DE-T2- 69 316 741

## Beschreibung

Die Erfindung betrifft ein Elektromagnetventil gemäß dem Oberbegriff von Anspruch 1 sowie ein Verfahren zur Herstellung eines Elektromagnetventils gemäß Anspruch 8.

Elektromagnetventile (vgl. z.B. DE102016202945 oder DE102018107053) umfassen üblicherweise eine Elektromagnetbaugruppe und eine damit verbundene Ventilbaugruppe. Die Elektromagnetbaugruppe umfasst einen elektromagnetischen Aktuator mit einem Aktuatorgehäuse, einer in dem Aktuatorgehäuse angeordneten und wahlweise bestrombaren Spule mit einem Spulenkörper und einem in einem Ankerraum in dem Aktuatorgehäuse des Elektromagnetventils beweglich angeordneten Anker mit einer Ankerstange. Die Ventilbaugruppe wiederum umfasst ein Ventil mit einem Ventilgehäuse und einem in dem Ventilgehäuse entlang einer Längsachse zwischen zumindest zwei Stellpositionen verstellbaren Ventilstößel, welcher mit der Ankerstange verstellbar verbunden ist. Das Ventilgehäuse umfasst einen der Elektromagnetbaugruppe zugewandten Durchlass, welcher von dem Ventilstößel wahlweise geöffnet oder geschlossen werden kann. Die Elektromagnetbaugruppe bildet eine Ventilaufnahme aus, in welcher das Ventilgehäuse zumindest abschnittsweise angeordnet ist. Die Elektromagnetbaugruppe umfasst eine der Ventilbaugruppe zugewandte Elektromagnetstirnfläche und die Ventilbaugruppe umfasst eine der Elektromagnetbaugruppe zugewandte Ventilstirnfläche.

Somit wirkt der Anker bzw. die Ankerstange in geeigneter Weise auf die Elemente der Ventilbaugruppe zum Öffnen oder Schließen desselben ein. Das Ventilgehäuse wird in geeigneter Weise mit einem Element der Elektromagnetbaugruppe verbunden. Diese Verbindung muss fluiddicht sein, um zu vermeiden, dass keine ungewollte Leckage entsteht, auch nicht bei hohen Fluiddrücken.

Der Erfindung liegt daher die Aufgabe zugrunde, ein Elektromagnetventil mit einer möglichst einfachen, dichten und zugleich auch stabilen fluiddichten Dichtung oder Verbindung zwischen einem Element der Elektromagnetbaugruppe und einem Element der Ventilbaugruppe zu schaffen. Gleichsam soll auch ein Verfahren zur Herstellung eines Elektromagnetventils vorgeschlagen werden, mit welchem ein Elektromagnetventil mit einer möglichst einfachen, dichten und zugleich auch stabilen fluiddichten Dichtung oder Verbindung zwischen einem Element der Elektromagnetbaugruppe und einem Element der Ventilbaugruppe herstellbar ist.

Hauptmerkmale der Erfindung sind im kennzeichnenden Teil von Anspruch 1 und in Anspruch 8 angegeben. Ausgestaltungen sind Gegenstand der Ansprüche 2 bis 7 und 9 sowie 10.

Erfindungsgemäß wird daher ein Elektromagnetventil geschaffen, umfassend eine Elektromagnetbaugruppe und eine damit verbundene Ventilbaugruppe, wobei die Elektromagnetbaugruppe einen elektromagnetischen Aktuator umfasst mit einem Aktuatorgehäuse, einer in dem Aktuatorgehäuse angeordneten und wahlweise bestrombaren Spule mit einem Spulenkörper und einem in einem Ankerraum in dem Aktuatorgehäuse des Elektromagnetventils beweglich angeordneten Anker mit einer Ankerstange, wobei die Ventilbaugruppe ein Ventil umfasst mit einem Ventilgehäuse und einem in dem Ventilgehäuse entlang einer Längsachse zwischen zumindest zwei Stellpositionen verstellbaren Ventilstößel, welcher mit der Ankerstange verstellbar verbunden ist, wobei das Ventilgehäuse einen der Elektromagnetbaugruppe zugewandten Durchlass umfasst, welcher von dem Ventilstößel wahlweise geöffnet oder geschlossen werden kann, wobei die Elektromagnetbaugruppe eine Ventilaufnahme ausbildet, in welcher das Ventilgehäuse zumindest abschnittsweise angeordnet ist, und die Elektromagnetbaugruppe eine der Ventilbaugruppe zugewandte Elektromagnetstirnfläche und die Ventilbaugruppe eine der Elektromagnetbaugruppe zugewandte Ventilstirnfläche umfasst. Das Elektromagnetventil zeichnet sich insbesondere dadurch aus, dass die Elektromagnetstirnfläche und/oder die Ventilstirnfläche einen Dichtbereich mit einer geschlossenen Dichtkante ausbildet und die Dichtkante an der jeweils anderen der beiden Stirnflächen dichtend anliegt, so dass der Ankerraum zumindest über den Zwischenraum zwischen Elektromagnetstirnfläche und Ventilstirnfläche fluiddicht verschlossen ist.

Die Erfindung schlägt also das Ausbilden von zumindest einem Dichtbereich mit Dichtkante aus, so dass die Dichtkante kein separates Element bildet, sondern vielmehr einteilig oder einstückig oder monolithisch mit dem jeweiligen Element ausgebildet ist. Dies reduziert erheblich die Gefahr von Leckagen durch eine Fehlmontage eines separaten Dichtelements. Die Dichtkante liegt dichtend oder fluiddichten an der jeweils anderen der beiden Stirnflächen an.

Als geschlossene Dichtkante soll eine Dichtkante verstanden werden, welche einen in sich geschlossenen Verlauf aufweist und keinen Start- und/oder Endpunkt aufweist.

Weiterbildungsgemäß kann Dichtbereich ein Dichtring sein oder einen solchem umfassen. Eine Ringform eignet sich insbesondere bei vorhandenen Fluiden, da er den anstehenden Drücken bestmöglich standhält. Zudem kann dadurch eine einfache Montage und Herstellung der Dichtung erzielt werden, sofern die Elektromagnetbaugruppe und die Ventilbaugruppe miteinander verschraubt werden.

Gemäß einer weiteren Ausgestaltung des Elektromagnetventils nach der Erfindung ist die dem Dichtbereich gegenüberliegende Stirnfläche durch eine Kraftwirkung des Dichtbereichs während der Montage der Elektromagnetbaugruppe und der Ventilbaugruppe derart verformt, dass die Dichtkante eine Dichtkerbe an der gegenüberliegende Stirnfläche ausformt und in diese einragt. Bei der Montage führt also das gegeneinanderpressen der Dichtkante an die gegenüberliegende Stirnfläche dazu, dass sich dort dadurch eine Dichtkerbe ausbildet und somit ein Formschluss vorhanden ist. Die Verformung kann plastischer und/oder elastischer Natur sein.

Es ist gemäß einer Weiterbildung des erfindungsgemäßen Elektromagnetventils denkbar, dass die Ventilaufnahme ein Innengewinde und das Ventilgehäuse ein mit dem Innengewinde korrespondierendes Außengewinde aufweist und das Ventilgehäuse in der Ventilaufnahme eingeschraubt ist. Ein verschrauben ist eine kostengünstige und sichere Methode zum Verbinden der beiden Baugruppen. Das Gewinde des Ventilgehäuses kann bei der Montage in das Gewinde der Ventilaufnahme eingreifen. Das Ventilgehäuse kann dabei eingedreht werden, bis die Dichtkante an der gegenüberliegenden Stirnfläche anliegt. Sodann kann das Ventilgehäuse weitergedreht werden, bis eine gewünschte Abdichtung zwischen dem Ventilgehäuse und der gegenüberliegenden Stirnfläche erreicht ist. Hierbei ist unerheblich, ob sich die Ventilaufnahme und/oder das Ventilgehäuse dreht.

Es ist bei einer weiteren Ausgestaltung des Elektromagnetventils nach der Erfindung denkbar, dass der Dichtbereich einen dreieckigen Querschnitt mit einer stumpfen Dichtkante aufweist. Stumpf bedeutet hier, dass die beiden die Dichtkante bildenden Schenkel des querschnittlichen Dreiecks einen Winkel von größer als 90° und kleiner als 180° miteinander einschließen. Eine derartige Dichtkante bildet kann mit Hohen Kräften in die gegenüberliegende Stirnseite eingedrückt werden, ohne dass dabei eine tiefe Dichtkerbe entsteht - vielmehr wird eine breite Dichtkerbe ausgebildet.

Alternativ oder zusätzlich zu einem der vorangehenden Absätze ist weiterbildungemäß auch denkbar, dass die stumpfe Dichtkante einen Innenwinkel (α) aufweist, welcher kleiner ist als 180° und größer als 160°, vorzugsweise größer als 165°, bevorzugt 170° beträgt.

Alternativ oder zusätzlich zu einem der vorangehenden Absätze ist gemäß einer Ausführungsform des Elektromagnetventils nach der Erfindung denkbar, dass dieses zumindest einen Schweißpunkt aufweist, der das Ventilgehäuse und das Aktuatorgehäuse unlösbar miteinander verbindet, vorzugsweise einen mittels Laserschweißen hergestellten Schweißpunkt. Dieser Schweißpunkt kann das Ventilgehäuse und das Aktuatorgehäuse nach einem Zusammenpressen und/oder einer Dichtkerbenausbildung in gepresstem Zustand fixieren, wodurch eine dauerhafte und dichte Verbindung realisiert ist.

Alternativ oder zusätzlich zu einem der vorangehenden Absätze ist auch eine Ausführungsform denkbar, wonach eine ringförmige Schweißnaht vorgesehen ist, welche das Ventilgehäuse und das Aktuatorgehäuse unlösbar miteinander verbindet und einen zwischen dem Ventilgehäuse und dem Aktuatorgehäuse gebildeten Ringspalt fluiddicht verschließt, vorzugsweise eine mittels Laserschweißen hergestellten Schweißnaht.

Alternativ oder zusätzlich zu einem der vorangehenden Absätze kann das Aktuatorgehäuse ein zumindest abschnittsweise zylindrisches Polrohr umfassen, wobei das Polrohr die Ventilaufnahme topfartigen ausbildet. Hierbei ist also das Element der Ventilaufnahme in das Polrohr integriert, wodurch das Polrohr mehreren Zwecken dient und eine Bauteilmenge reduziert.

Es ist alternativ oder zusätzlich zu einem der vorangehenden Absätze gemäß einer Weiterbildung denkbar, das Polrohr den Spulenkörper trägt. Auch hier ist die Tragende Funktion für den Spulenkörper in das Polrohr integriert, was ebenfalls eine Bauteilmenge durch die Funktionsintegration reduziert.

Denkbar ist alternativ oder zusätzlich zu einem der vorangehenden Absätze ein erfindungsgemäßes Elektromagnetventil, bei welchem das Polrohr eine Vielzahl von benachbart zueinander angeordneten Abschnitten umfasst, welche vorzugsweise unterschiedliche Durchmesser und/oder Wandstärken aufweisen. Die Abschnitte können aneinander in Richtung der Längsachse aneinander anschließen und den unterschiedlichen Funktionen des Polrohr Rechnung tragen bzw. daran angepasst sein.

Möglich ist alternativ oder zusätzlich zu einem der vorangehenden Absätze auch ein Elektromagnetventil nach der Erfindung, bei welchem das Polrohr in einem Eckbereich zwischen zwei benachbarten Abschnitten eine bezüglich der Längsachse konzentrisch angeordnete und bezüglich der Innenflächen der benachbarten Abschnitte zurückspringend ausgebildete Einwölbung umfasst. Diese Einwölbung ist also in das Polrohr eingewölbt und verhindert, dass ein anderer als der Dichtbereich des Ventilgehäuses in Anlage mit dem Polrohr kommt. Es ist somit sichergestellt, dass bei der Montage lediglich der Dichtbereich mit seiner Dichtkante die fluiddichte Dichtung ausbildet. Fehlmontagen oder montagebedingte Leckagen können somit ausgeschlossen werden.

Es ist alternativ oder zusätzlich zu einem der vorangehenden Absätze auch ein Elektromagnetventil nach der Erfindung denkbar, bei welchem das Polrohr die Elektromagnetstirnfläche umfasst, vorzugsweise an einem Bodenabschnitt, welcher weiter bevorzugt innerhalb der Ventilaufnahme angeordnet ist. Bodenabschnitt soll derjenige Abschnitt sein, welcher einen Boden der Ventilaufnahme bildet. Die Dichtung kann somit in der Ventilaufnahme ausgebildet werden und daher nahe an einem Fluidpfad liegen, entlang welchem ein Fluid durch das Elektromagnetventil führbar ist.

Gemäß einer erfindungsgemäßen Weiterbildung des Elektromagnetventils nach der Erfindung kann alternativ oder zusätzlich zu einem der vorangehenden Absätze das Ventilgehäuse die Ventilstirnfläche umfassen. Somit ist die Dichtungsfunktion in das Gehäuse selbst integriert.

Denkbar ist weiterbildungemäß, dass die Elektromagnetstirnfläche und/oder die Ventilstirnfläche von einem metallischen Element ausgebildet ist/sind, so dass der Dichtbereich eine metallische Dichtung ausbilden kann. Vorzugsweise sind beide Stirnflächen von metallischen Elementen gebildet, so dass eine Dichtung realisiert werden kann, welche einfach und dichtend sowie zugleich auch stabil ist.

Gemäß einer Weiterbildung des Elektromagnetventils nach der Erfindung ist der zumindest eine Dichtbereich derart angeordnet und/oder ausgebildet, dass er bezüglich der Längsachse in axialer Richtung und/oder in radialer Richtung dichtet. Gerade die Kombination aus einem axial dichtenden Dichtbereich und einer Gewindeverschraubung führt zu einem einfach montierbaren Elektromagnetventil mit einer dauerhaften Dichtung.

Erfindungsgemäß wird zudem ein Verfahren zur Herstellung eines Elektromagnetventils mit einer Elektromagnetbaugruppe und einer Ventilbaugruppe vorgeschlagen, wobei die Elektromagnetbaugruppe einen elektromagnetischen Aktuator umfasst mit einem Aktuatorgehäuse, einer in dem Aktuatorgehäuse angeordneten und wahlweise bestrombaren Spule mit einem Spulenkörper und einem in einem Ankerraum in dem Aktuatorgehäuse des Elektromagnetventils beweglich angeordneten Anker mit einer Ankerstange, wobei die Ventilbaugruppe ein Ventil umfasst mit einem Ventilgehäuse und einem in dem Ventilgehäuse entlang der Längsachse zwischen zumindest zwei Stellpositionen verstellbaren Ventilstößel, welcher mit der Ankerstange verstellbar verbunden ist, wobei das Ventilgehäuse einen der Elektromagnetbaugruppe zugewandten Durchlass umfasst, welcher von dem Ventilstößel wahlweise geöffnet oder geschlossen werden kann, wobei die Elektromagnetbaugruppe eine Ventilaufnahme ausbildet, in welcher das Ventilgehäuse zumindest abschnittsweise angeordnet ist, und die Elektromagnetbaugruppe eine der Ventilbaugruppe zugewandte Elektromagnetstirnfläche und die Ventilbaugruppe eine der Elektromagnetbaugruppe zugewandte Ventilstirnfläche umfasst, wobei die Elektromagnetstirnfläche und/oder die Ventilstirnfläche einen Dichtbereich mit einer geschlossenen Dichtkante ausbildet und die Dichtkante an der jeweils anderen der beiden Stirnflächen dichtend anliegt, so dass der Ankerraum zumindest über den Zwischenraum zwischen Elektromagnetstirnfläche Ventilstirnfläche fluiddicht verschlossen ist, umfassend die Schritte:
- Einbringen des Ventilgehäuses in die Ventilaufnahme zumindest so weit, dass der mindestens eine Dichtbereich an der jeweils anderen der beiden Stirnflächen anliegt;
- Fortsetzen des Einbringens zumindest so weit, dass der Dichtbereich und die jeweils andere der beiden Stirnflächen eine fluiddichte Verbindung ausbilden.

Das Einbringen und Fortsetzen können zwei getrennte ggf. zeitlich unterbrochene Schritte oder aber auch ein einziger Schritt sein. Eine fluiddichte Verbindung ist dann ausgebildet, wenn ein Dichtbereich so fest an der jeweils anderen der beiden Stirnflächen anliegt, dass die Dichtung oder die Verbindung einem gegebenen Fluiddruck standhält.

Die bereits bezüglich des Elektromagnetventils beschriebenen Vorteile ergeben sich analog auch bezüglich dem Verfahren, worauf hiermit verwiesen wird.

Weiterbildungsgemäß kann das Verfahren nach der Erfindung vorsehen, dass die dem Dichtbereich gegenüberliegende Stirnfläche durch eine Kraftwirkung des Dichtbereichs während der Montage der Elektromagnetbaugruppe und der Ventilbaugruppe derart verformt wird, dass die Dichtkante eine Dichtkerbe an der gegenüberliegenden Stirnfläche ausformt und in diese einragt. Die bereits bezüglich des Elektromagnetventils beschriebenen Vorteile ergeben sich analog auch bezüglich dem Verfahren, worauf hiermit verwiesen wird.

Denkbar ist alternativ oder zusätzlich zu einem der vorangehenden Absätze zudem, dass bei dem Verfahren nach der Erfindung die Ventilaufnahme ein Innengewinde und das Ventilgehäuse ein mit dem Innengewinde korrespondierendes Außengewinde aufweist und das Einbringen des Ventilgehäuses in der Ventilaufnahme ein Einschrauben ist. Die bereits bezüglich des Elektromagnetventils beschriebenen Vorteile ergeben sich analog auch bezüglich dem Verfahren, worauf hiermit verwiesen wird.

Gemäß einer Ausgestaltung sieht das erfindungsgemäße Verfahren alternativ oder zusätzlich zu einem der vorangehenden Absätze ein Anbringen zumindest eines Schweißpunkts derart vor, dass das Ventilgehäuse und das Aktuatorgehäuse unlösbar miteinander verbunden werden, vorzugsweise mittels eines per Laserschweißen hergestellten Schweißpunkts. Die bereits bezüglich des Elektromagnetventils beschriebenen Vorteile ergeben sich analog auch bezüglich dem Verfahren, worauf hiermit verwiesen wird.

Das erfindungsgemäße Verfahren kann alternativ oder zusätzlich zu einem der vorangehenden Absätze auch derart weitergestaltet werden, dass ein Anbringen einer ringförmigen Schweißnaht vorgesehen ist, welche das Ventilgehäuse und das Aktuatorgehäuse unlösbar miteinander verbindet und einen zwischen dem Ventilgehäuse und dem Aktuatorgehäuse gebildeten Ringspalt fluiddicht verschließt, vorzugsweise mittels einer per Laserschweißen hergestellten Schweißnaht. Die bereits bezüglich des Elektromagnetventils beschriebenen Vorteile ergeben sich analog auch bezüglich dem Verfahren, worauf hiermit verwiesen wird.

Denkbar ist zudem ein erfindungsgemäßes Verfahren, bei welchem ein Polrohr des Aktuatorgehäuses in einem Eckbereich zwischen zwei benachbarten Abschnitten eine bezüglich der Längsachse konzentrisch angeordnete und bezüglich der Innenflächen der benachbarten Abschnitte zurückspringend ausgebildete Einwölbung umfasst, wobei das Einbringen des Ventilgehäuses in die Ventilaufnahme höchstens so weit erfolgt, dass ein der Einwölbung gegenüberliegender Eckbereich des Ventilgehäuses mit einem Abstand dazu angeordnet ist. Die bereits bezüglich des Elektromagnetventils beschriebenen Vorteile ergeben sich analog auch bezüglich dem Verfahren, worauf hiermit verwiesen wird.

Das erfindungsgemäße Verfahren kann alternativ oder zusätzlich zu einem der vorangehenden Absätze vorsehen, dass die Elektromagnetstirnfläche und/oder die Ventilstirnfläche von einem metallischen Element ausgebildet ist/sind, so dass das Einbringen des Ventilgehäuses in die Ventilaufnahme zu einer durch den Dichtbereich in der jeweils anderen der beiden Stirnflächen erzeugten metallischen Verformung und somit zu einer metallischen Dichtung führt. Die bereits bezüglich des Elektromagnetventils beschriebenen Vorteile ergeben sich analog auch bezüglich dem Verfahren, worauf hiermit verwiesen wird.

Gemäß einer Weiterbildung des Verfahrens wird alternativ oder zusätzlich zu einem der vorangehenden Absätze hiernach ein Elektromagnetventil nach einem der vorherigen Absätze gebildet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

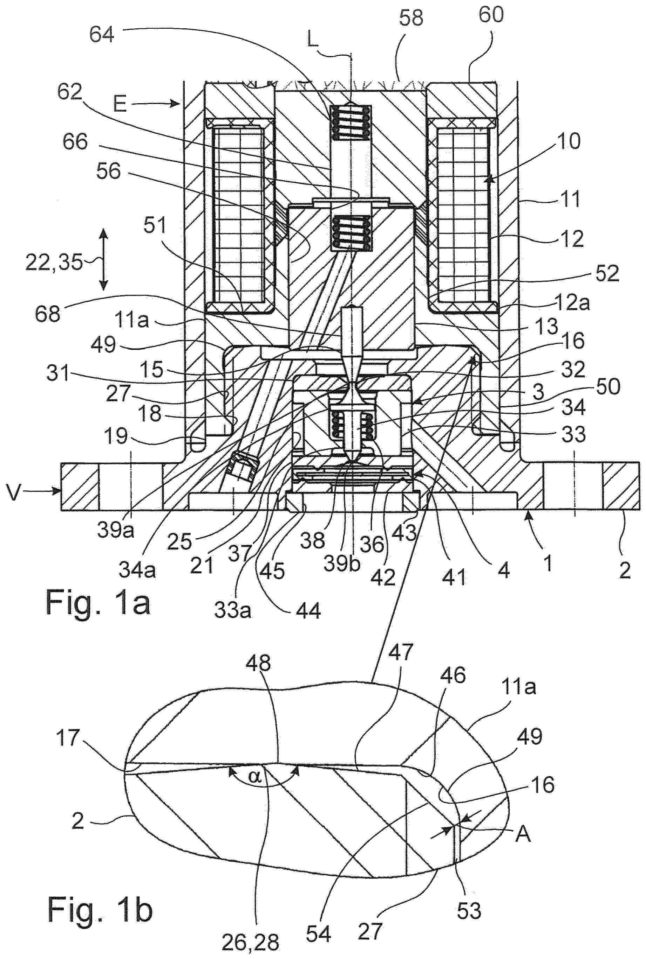

- Fig. 1a: eine Längsschnittansicht durch ein erfindungsgemäßes Elektromagnetventil und
- Fig. 1b: eine Detailansicht eines erfindungsgemäßen Elektromagnetventils nach Fig. 1a.

Figur 1a zeigt eine Längsschnittansicht durch ein erfindungsgemäßes Elektromagnetventil. Das Elektromagnetventil umfasst ein Ventil 1 und einen daran zu dessen Verstellung angeordneten elektromagnetischen Aktuator 10, welcher als monostabiler Linearmagnet in bekannter Weise ausgebildet ist. Das Elektromagnetventil ist in seiner Längsrichtung von einer Längsachse L durchgriffen.

Der elektromagnetische Aktuator 10 umfasst in einem Aktuatorgehäuse 11 eine Spule 12 mit einem Spulenkörper 12a, der eine wahlweise bestrombare Wicklung trägt. Ein zumindest abschnittsweise zylindrisches Polrohr 11a schließt den Aktuator 10 an seiner dem Ventil 1 zugewandten Endseite ab. Das Polrohr 11a weist drei Abschnitte 50, 51 und 52 auf, wobei die Abschnitte 51 und 52 den Spulenkörper 12a tragen und die Abschnitte 51 und 50 eine topfartige Ventilaufnahme 16 für das Ventil 1 ausbilden. An seiner dem Polrohr 11a gegenüberliegenden Endseite weist der Aktuator 10 einen Kern 58 und eine kernseitige Gehäuseplatte 60 zum Schließen des Magnetkreises auf. Der Kern 58 umfasst eine koaxial zur Längsachse L ausgebildete Kernbohrung 62 zur Aufnahme einer ersten Rückstellfeder 64 auf. Zudem ist ein mittels wahlweiser Bestromung der Wicklung entlang der Längsachse L verstellbarer Anker 13 vorgesehen. Der Anker 13 umfasst an seiner dem Kern 58 zugewandten Seite eine erste Ankerbohrung 66 zur Aufnahme der ersten Rückstellfeder 64. Die erste Rückstellfeder 64 stützt sich somit einerseits am Grund der Kernbohrung 62 und anderenends am Grund der erste Ankerbohrung 66 ab. Die erste Rückstellfeder 64 ist als Druckfeder ausgebildet und spannt den Anker 13 in seine stromlos ausgefahrene Position vor. In Figur 1a ist die Wicklung im bestromten Zustand dargestellt und der Anker 13 entgegen der Federkraft der ersten Rückstellfeder 64 in seine eingefahrene Position verstellt. An seiner der ersten Ankerbohrung 66 gegenüberliegenden Seite weist der Anker 13 eine zweite Ankerbohrung 68 auf, in welche eine Ankerstange 15 einragt und dort fixiert ist. Die Ankerstange 15 ist mit dem Anker 13 verstellbar.

Das Ventil 1 umfasst ein Ventilgehäuse 2. Das Ventilgehäuse 2 weist an seiner Außenseite ein Befestigungsmittel auf, welches vorliegend als Außengewinde 27 ausgebildet ist. Das Außengewinde 27 greift in ein in der Ventilaufnahme 16 des Polrohrs 11a ausgebildetes Innengewinde 18 ein. Das Polrohr 11a bildet die Ventilaufnahme 16 topfartig aus. Mittels einer Schweißnaht 19 ist das Ventil 1 mit dem Aktuator 10 dauerhaft verbunden. In dem Ventilgehäuse 2 ist in einer Ausnehmung 21 mit einer Tiefenrichtung 22 entlang einer Hubrichtung 35, eine Ventileinheit 3 und eine Filtereinheit 4 angeordnet.

Die Ventileinheit 3 umfasst eine erste Ventilscheibe 31 mit einem einen Durchlass 25 umfassenden ersten Ventilsitz 32 und eine Stößelführung 33, wobei die erste Ventilscheibe 31 mit einer ersten äußeren Stirnfläche der Stößelführung 33 in Anlage ist. Bezüglich der Stößelführung 33 ist anderenends eine zweite Ventilscheibe 37 angeordnet, die einen zweiten Ventilsitz 38 aufweist und mit einer der ersten Stirnfläche der Stößelführung 33 gegenüberliegenden zweiten äußeren Stirnfläche der Stößelführung 33 in Anlage ist. Die Stößelführung 33 ist als Hohlzylinder ausgebildet und weist eine entlang der Längsachse L durchgehende Ausnehmung auf. In der Ausnehmung ist in Richtung der Längsachse L ein Ventilstößel 34 verschiebbar aufgenommen. Der Ventilstößel 34 ist in der koaxial zur Längsachse L ausgerichteten Hubrichtung 35 zwischen einer ersten Endposition und einer zweiten Endposition beweglich angeordnet, wobei er in der ersten Endposition den ersten Ventilsitz 32 und in der zweiten Endposition den zweiten Ventilsitz 38 abdichtet. Der Ventilstößel 34 ist als ein zylinderförmiger Stab ausgebildet, der sich in der Hubrichtung 35 erstreckt und ein erstes freies Ende 39a zum Abdichten des ersten Ventilsitzes 32 und ein zweites freies Ende 39b zum Abdichten des zweiten Ventilsitzes 38 aufweist. Die Stößelführung 33 und der Ventilstößel 34 weisen jeweils einen beabstandet zueinander angeordneten Führungsvorsprung 33a, 34a auf. In der Ausnehmung ist ein sich an den Führungsvorsprüngen 33a, 34a abstützendes Rückstellelement 36 angeordnet, welches als Druckfeder ausgebildet ist und den Ventilstößel 34 in seine erste Endposition vorspannt. Der Ventilstößel 34 ist über seine der Ankerstange 15 zugewandte Stirnseite mit diesem schwimmend verbunden.

Die Führungsvorsprünge 33a, 34a sind ringförmig ausgebildet und erstrecken sich jeweils senkrecht zu der Hubrichtung 35. Der Führungsvorsprung 33a der Stößelführung 33 ist bezogen auf die Hubrichtung 35 des Ventilstößels 34 in einem Endabschnitt der Stößelführung 33 angeordnet. Der Führungsvorsprung 34a des Ventilstößels 34 ist in einem der ersten Ventilscheibe 31 zugewandten Endbereich des Ventilstößels 34 angeordnet. Der Führungsvorsprung 33a der Stößelführung 33 ist in einem der zweiten Ventilscheibe 37 zugewandten Endbereich der Stö-βelführung 33 angeordnet. Der Führungsvorsprung 34a ist umfangsseitig konvex gewölbt ausgebildet, um ein einfaches Einpassen bei der Montage zu gewährleisen und ein Verkanten beim Betrieb zu verhindern.

Figur 1a zeigt, dass sich der Ventilstößel 34 in zumindest einer den zweiten Ventilsitz 38 abdichtenden Stellung durch den Führungsvorsprung 33a der Stößelführung 33 erstreckt. Die Stö-βelführung 33 kann als ein Stanzbauteil, als ein Kaltumformteil oder als ein Metallpulverspritzugussteil ausgebildet sein. Die erste Ventilscheibe 31, die zweite Ventilscheibe 37 und/oder der Ventilstößel 34 können jeweils als ein Stanzbauteil, als ein Kaltumformteil oder als ein Spanteil ausgebildet sein.

Die Filtereinheit 4 umfasst ein Filtersieb 41, welches in Richtung der Längsachse L an einem vorspringenden Distanzring der zweiten Ventilscheibe 37 anliegt, und einen Filterträger 42, welcher in Richtung der Längsachse L Über einen vorspringenden Distanzring an dem Filtersieb 41 anliegt. Eine ebenfalls in der Ausnehmung 21 angeordnete und als Ring ausgeführte Dichtung 43 liegt außenseitig an dem Filterträger 42 an. Die Dichtung 43 weist eine Außenfläche 44 und einen zum Filtersieb 41 führenden Durchlass 45 auf.

Fig. 1a zeigt zudem, dass das Elektromagnetventil eine Elektromagnetbaugruppe E und eine damit verbundene Ventilbaugruppe V umfasst, wobei die Elektromagnetbaugruppe E zumindest den elektromagnetischen Aktuator 10 umfasst mit dem Aktuatorgehäuse 11, der in dem Aktuatorgehäuse 11 angeordneten und wahlweise bestrombaren Spule 12 mit einem Spulenkörper 12a und dem in einem Ankerraum 56 in dem Aktuatorgehäuse 11 des Elektromagnetventils beweglich angeordneten Anker 13 mit der Ankerstange 15. Die Ventilbaugruppe V wiederum umfasst ein Ventil 1 mit dem Ventilgehäuse 2 und dem in dem Ventilgehäuse 2 entlang der Längsachse L zwischen zumindest zwei Stellpositionen verstellbaren Ventilstößel 34, welcher mit der Ankerstange 15 verstellbar verbunden ist. Das Ventilgehäuse 2 umfasst den der Elektromagnetbaugruppe E zugewandten Durchlass 25, welcher von dem Ventilstößel 34 wahlweise geöffnet oder geschlossen werden kann, wobei die Elektromagnetbaugruppe E die Ventilaufnahme 16 ausbildet, in welcher das Ventilgehäuse 2 zumindest abschnittsweise eingeschraubt ist.

Fig. 1b zeigt nun, dass die Elektromagnetbaugruppe E eine der Ventilbaugruppe V zugewandte Elektromagnetstirnfläche 46 und die Ventilbaugruppe V eine der Elektromagnetbaugruppe E zugewandte Ventilstirnfläche 47 umfasst. Die die Ventilstirnfläche 47 bildet einen Dichtbereich mit einer geschlossenen Dichtkante 28 aus. Die Dichtkante 28 liegt an der jeweils anderen Stirnfläche 46 dichtend an, so dass der Ankerraum 56 zumindest über den Zwischenraum zwischen Elektromagnetstirnfläche 46 und Ventilstirnfläche 47 fluiddicht verschlossen ist. Der Dichtbereich ist als ein geschlossener Dichtring 26 ausgebildet oder umfasst einen solchen. Der in axialer Richtung bezüglich der Längsachse L dichtende Dichtbereich weist einen dreieckigen Querschnitt mit einer stumpfen Dichtkante 28 auf, welche einen stumpfen Innenwinkel (α) aufweist.

Erkennbar ist, dass die dem Dichtbereich gegenüberliegende Elektromagnetstirnfläche 46 durch eine Kraftwirkung des Dichtbereichs während der Montage der Elektromagnetbaugruppe E und der Ventilbaugruppe V miteinander derart verformt ist, dass die Dichtkante 28 mit dessen Dichtring 26 eine Dichtkerbe 48 an der gegenüberliegende Stirnfläche bzw. Elektromagnetstirnfläche 46 ausformt und in diese einragt.

Das Polrohr 11a umfasst in einem Eckbereich 49 zwischen zwei benachbarten Abschnitten 50, 51 eine bezüglich der Längsachse L konzentrisch angeordnete und bezüglich der Innenflächen der benachbarten Abschnitte 50, 51 zurückspringend ausgebildete Einwölbung 53. Die Einwölbung 53 wölbt sich in den Körper des Polrohrs 11a ein. Ein der Einwölbung 53 gegenüberliegender Eckbereich 54 des Ventilgehäuses 2 ist im montierten Zustand mit einem Abstand A zur Einwölbung 53 angeordnet.

Das Polrohr 11a umfasst die Elektromagnetstirnfläche 46 an einem Bodenabschnitt 17, welcher innerhalb der Ventilaufnahme 16 angeordnet ist. Das Ventilgehäuse 2 wiederum umfasst die Ventilstirnfläche 47. Sowohl das Polrohr 11a wie auch das Ventilgehäuse 2 sind aus einem metallischen Werkstoff ausgebildet, so dass die Elektromagnetstirnfläche 46 und die Ventilstirnfläche 47 jeweils von einem metallischen Element ausgebildet sind, so dass der Dichtbereich eine metallische Dichtung ausbildet.

Zur Herstellung des gezeigten Elektromagnetventils mit der Elektromagnetbaugruppe E und der Ventilbaugruppe V wird das Ventilgehäuse 2 in die Ventilaufnahme 16 zumindest so weit eingebracht, dass der mindestens eine Dichtbereich an der jeweils anderen der beiden Stirnflächen 46, 47 anliegt und das Einbringen zumindest so weit fortgesetzt, dass der Dichtbereich und die jeweils andere der beiden Stirnflächen 46, 47 eine fluiddichte Verbindung ausbilden.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 1 | Ventil | 41 | Filtersieb |
| 2 | Ventilgehäuse | 42 | Filterträger |
| 3 | Ventileinheit | 43 | Dichtung |
| 4 | Filtereinheit | 44 | Außenfläche |
| 10 | elektromagnetischer Aktuator | 45 | Durchlass |
| 11 | Aktuatorgehäuse | 46 | Elektromagnetstirnfläche |
| 11a | Polrohr | 47 | Ventilstirnfläche |
| 12 | Spule | 48 | Dichtkerbe |
| 12a | Spulenkörper | 49 | Eckbereich |
| 13 | Anker | 50 | Abschnitt |
| 15 | Ankerstange | 51 | Abschnitt |
| 16 | Ventilaufnahme | 52 | Abschnitt |
| 17 | Bodenabschnitt | 53 | Einwölbung |
| 18 | Innengewinde | 54 | Eckbereich |
| 19 | Schweißnaht | 56 | Ankerraum |
| 21 | Ausnehmung | 58 | Kern |
| 22 | Tiefenrichtung | 60 | Gehäuseplatte |
| 25 | Durchlass | 62 | Kernbohrung |
| 26 | Dichtring | 64 | erste Rückstellfeder |
| 27 | Außengewinde | 66 | erste Ankerbohrung |
| 28 | Dichtkante | 68 | zweite Ankerbohrung |
| 31 | erste Ventilscheibe | | |
| 32 | erster Ventilsitz | A | Abstand |
| 33 | Stößelführung | E | Elektromagnetbaugruppe |
| 33a | Führungsvorsprung | L | Längsachse |
| 34 | Ventilstößel | V | Ventilbaugruppe |
| 34a | Führungsvorsprung | | |
| 35 | Hubrichtung | α | Winkel |
| 36 | Rückstellelement | | |
| 37 | zweite Ventilscheibe | | |
| 38 | zweiter Ventilsitz | | |
| 39a | freies Ende | | |
| 39b | freies Ende | | |

## Patentansprüche

1. Elektromagnetventil, umfassend eine Elektromagnetbaugruppe (E) und eine damit verbundene Ventilbaugruppe (V),
wobei die Elektromagnetbaugruppe (E) einen elektromagnetischen Aktuator (10) umfasst mit einem Aktuatorgehäuse (11), einer in dem Aktuatorgehäuse (11) angeordneten und wahlweise bestrombaren Spule (12) mit einem Spulenkörper (12a) und einem in einem Ankerraum (56) in dem Aktuatorgehäuse (11) des Elektromagnetventils beweglich angeordneten Anker (13) mit einer Ankerstange (15),
wobei die Ventilbaugruppe (V) ein Ventil (1) umfasst mit einem Ventilgehäuse (2) und einem in dem Ventilgehäuse (2) entlang einer Längsachse (L) zwischen zumindest zwei Stellpositionen verstellbaren Ventilstößel (34), welcher mit der Ankerstange (15) verstellbar verbunden ist, wobei das Ventilgehäuse (2) einen der Elektromagnetbaugruppe (E) zugewandten Durchlass (25) umfasst, welcher von dem Ventilstößel (34) wahlweise geöffnet oder geschlossen werden kann,
wobei die Elektromagnetbaugruppe (E) eine Ventilaufnahme (16) ausbildet, in welcher das Ventilgehäuse (2) zumindest abschnittsweise angeordnet ist, und die Elektromagnetbaugruppe (E) eine der Ventilbaugruppe (V) zugewandte Elektromagnetstirnfläche (46) und die Ventilbaugruppe (V) eine der Elektromagnetbaugruppe (E) zugewandte Ventilstirnfläche (47) umfasst, **dadurch gekennzeichnet, dass**
die Elektromagnetstirnfläche (46) und/oder die Ventilstirnfläche (47) einen Dichtbereich mit einer geschlossenen Dichtkante (28) ausbildet und die Dichtkante (28) an der jeweils anderen der beiden Stirnflächen (46, 47) dichtend anliegt, so dass der Ankerraum (56) zumindest über den Zwischenraum zwischen Elektromagnetstirnfläche (46) und Ventilstirnfläche (47) fluiddicht verschlossen ist.

2. Elektromagnetventil nach Anspruch 1, **dadurch gekennzeichnet, dass** der Dichtbereich ein Dichtring (26) ist.

3. Elektromagnetventil nach einem der vorhergehenden Ansprüche, **dadurch gekennzeichnet, dass** die dem Dichtbereich gegenüberliegende Stirnfläche (46, 47) durch eine Kraftwirkung des Dichtbereichs während der Montage der Elektromagnetbaugruppe (E) und der Ventilbaugruppe (V) derart verformt ist, dass die Dichtkante (28) eine Dichtkerbe (48) an der gegenüberliegende Stirnfläche (46, 47) ausformt und in diese einragt.

4. Elektromagnetventil nach einem der vorhergehenden Ansprüche, **dadurch gekennzeichnet, dass** die Ventilaufnahme (16) ein Innengewinde (18) und das Ventilgehäuse (2) ein mit dem Innengewinde (18) korrespondierendes Außengewinde (27) aufweist und das Ventilgehäuse (2) in der Ventilaufnahme (16) eingeschraubt ist.

5. Elektromagnetventil nach einem der vorhergehenden Ansprüche, **dadurch gekennzeichnet, dass** der Dichtbereich einen dreieckigen Querschnitt mit einer stumpfen Dichtkante (28) aufweist.

6. Elektromagnetventil nach einem der vorhergehenden Ansprüche, **dadurch gekennzeichnet, dass** die Elektromagnetstirnfläche (46) und/oder die Ventilstirnfläche (47) von einem metallischen Element ausgebildet ist/sind, so dass der Dichtbereich eine metallische Dichtung ausbildet.

7. Elektromagnetventil nach einem der vorhergehenden Ansprüche, **dadurch gekennzeichnet, dass** der Dichtbereich derart angeordnet und/oder ausgebildet ist, dass er bezüglich der Längsachse (L) in axialer Richtung und/oder in radialer Richtung dichtet.

8. Verfahren zur Herstellung eines Elektromagnetventils mit einer Elektromagnetbaugruppe (E) und einer Ventilbaugruppe (V),
wobei die Elektromagnetbaugruppe (E) einen elektromagnetischen Aktuator (10) umfasst mit einem Aktuatorgehäuse (11), einer in dem Aktuatorgehäuse (11) angeordneten und wahlweise bestrombaren Spule (12) mit einem Spulenkörper (12a) und einem in einem Ankerraum (56) in dem Aktuatorgehäuse (11) des Elektromagnetventils beweglich angeordneten Anker (13) mit einer Ankerstange (15),
wobei die Ventilbaugruppe (V) ein Ventil (1) umfasst mit einem Ventilgehäuse (2) und einem in dem Ventilgehäuse (2) entlang der Längsachse (L) zwischen zumindest zwei Stellpositionen verstellbaren Ventilstößel (34), welcher mit der Ankerstange (15) verstellbar verbunden ist, wobei das Ventilgehäuse (2) einen der Elektromagnetbaugruppe (E) zugewandten Durchlass (25) umfasst, welcher von dem Ventilstößel (34) wahlweise geöffnet oder geschlossen werden kann,
wobei die Elektromagnetbaugruppe (E) eine Ventilaufnahme (16) ausbildet, in welcher das Ventilgehäuse (2) zumindest abschnittsweise angeordnet ist, und die Elektromagnetbaugruppe (E) eine der Ventilbaugruppe (V) zugewandte Elektromagnetstirnfläche (46) und die Ventilbaugruppe (V) eine der Elektromagnetbaugruppe (E) zugewandte Ventilstirnfläche (47) umfasst, wobei
die Elektromagnetstirnfläche (46) und/oder die Ventilstirnfläche (47) einen Dichtbereich mit einer geschlossenen Dichtkante (28) ausbildet und die Dichtkante (28) an der jeweils anderen der beiden Stirnflächen (46, 47) dichtend anliegt, so dass der Ankerraum (56) zumindest über den Zwischenraum zwischen Elektromagnetstirnfläche (46) Ventilstirnfläche (47) fluiddicht verschlossen ist, umfassend die Schritte:
a. Einbringen des Ventilgehäuses (2) in die Ventilaufnahme (16) zumindest so weit, dass der mindestens eine Dichtbereich an der jeweils anderen der beiden Stirnflächen (46, 47) anliegt;
b. Fortsetzen des Einbringens zumindest so weit, dass der Dichtbereich und die jeweils andere der beiden Stirnflächen (46, 47) eine fluiddichte Verbindung ausbilden.

9. Verfahren nach Anspruch 8, **dadurch gekennzeichnet, dass** die dem Dichtbereich gegenüberliegende Stirnfläche (46, 47) durch eine Kraftwirkung des Dichtbereichs während der Montage der Elektromagnetbaugruppe (E) und der Ventilbaugruppe (V) derart verformt wird, dass die Dichtkante (28) eine Dichtkerbe (48) an der gegenüberliegenden Stirnfläche (46, 47) ausformt und in diese einragt.

10. Verfahren nach einem der vorhergehenden Ansprüche, **dadurch gekennzeichnet, dass** ein Polrohr (11a) des Aktuatorgehäuses (11) in einem Eckbereich (49) zwischen zwei benachbarten Abschnitten (50, 51) eine bezüglich der Längsachse (L) konzentrisch angeordnete und bezüglich der Innenflächen der benachbarten Abschnitte (50, 51) zurückspringend ausgebildete Einwölbung (53) umfasst, wobei das Einbringen des Ventilgehäuses (2) in die Ventilaufnahme (16) höchstens so weit erfolgt, dass ein der Einwölbung (53) gegenüberliegender Eckbereich (54) des Ventilgehäuses (2) mit einem Abstand (A) dazu angeordnet ist.

## Claims

1. Electromagnetic valve comprising an electromagnet assembly (E) and an associated valve assembly (V), wherein the electromagnet assembly (E) comprises an electromagnetic actuator (10) having an actuator housing (11), having a coil (12) which is arranged in the actuator housing (11) and is selectively electrically energizable and has a coil body (12a), and having an armature (13) which is arranged movably in an armature chamber (56) in the actuator housing (11) of the electromagnetic valve and has an armature rod (15),
wherein the valve assembly (V) comprises a valve (1) having a valve housing (2), and having a valve plunger (34) which is adjustable in the valve housing (2) along a longitudinal axis (L) between at least two actuation positions and is connected in an adjustable manner to the armature rod (15), wherein the valve housing (2) comprises a passage (25) which faces towards the electromagnetic assembly (E) and which can be selectively opened or closed by the valve plunger (34),
wherein the electromagnet assembly (E) forms a valve-receiving part (16) in which the valve housing (2) is arranged at least sectionally, and the electromagnet assembly (E) comprises an electromagnet end face (46) facing towards the valve assembly (V) and the valve assembly (V) comprises a valve end face (47) facing towards the electromagnet assembly (E), **characterized in that**
the electromagnet end face (46) and/or the valve end face (47) form(s) a sealing region with a closed sealing edge (28), and the sealing edge (28) abuts sealingly against the in each case other one of the two end faces (46, 47), so that the armature chamber (56) is closed off in a fluid-tight manner at least over the intermediate space between electromagnet end face (46) and valve end face (47).

2. Electromagnetic valve according to Claim 1, **characterized in that** the sealing region is a sealing ring (26).

3. Electromagnetic valve according to either of the preceding claims, **characterized in that** the end face (46, 47) situated opposite the sealing region is deformed by an action of force of the sealing region during the assembly of the electromagnet assembly (E) and the valve assembly (V) in such a way that the sealing edge (28) forms a sealing notch (48) on the oppositely situated end face (46, 47) and projects into it.

4. Electromagnetic valve according to one of the preceding claims, **characterized in that** the valve-receiving part (16) has an inner thread (18) and the valve housing (2) has an outer thread (27), which corresponds to the inner thread (18), and the valve housing (2) is screwed in the valve-receiving part (16) .

5. Electromagnetic valve according to one of the preceding claims, **characterized in that** the sealing region has a triangular cross section with an obtuse-angled sealing edge (28).

6. Electromagnetic valve according to one of the preceding claims, **characterized in that** the electromagnet end face (46) and/or the valve end face (47) are/is formed by a metallic element, so that the sealing region forms a metallic seal.

7. Electromagnetic valve according to one of the preceding claims, **characterized in that** the sealing region is arranged and/or formed in such a way that it provides sealing in an axial direction and/or in a radial direction with respect to the longitudinal axis (L).

8. Method for producing an electromagnetic valve having an electromagnet assembly (E) and a valve assembly (V),
wherein the electromagnet assembly (E) comprises an electromagnetic actuator (10) having an actuator housing (11), having a coil (12) which is arranged in the actuator housing (11) and is selectively electrically energizable and has a coil body (12a), and having an armature (13) which is arranged movably in an armature chamber (56) in the actuator housing (11) of the electromagnetic valve and has an armature rod (15),
wherein the valve assembly (V) comprises a valve (1) having a valve housing (2), and having a valve plunger (34) which is adjustable in the valve housing (2) along the longitudinal axis (L) between at least two actuation positions and is connected in an adjustable manner to the armature rod (15), wherein the valve housing (2) comprises a passage (25) which faces towards the electromagnetic assembly (E) and which can be selectively opened or closed by the valve plunger (34),
wherein the electromagnet assembly (E) forms a valve-receiving part (16) in which the valve housing (2) is arranged at least sectionally, and the electromagnet assembly (E) comprises an electromagnet end face (46) facing towards the valve assembly (V) and the valve assembly (V) comprises a valve end face (47) facing towards the electromagnet assembly (E), wherein
the electromagnet end face (46) and/or the valve end face (47) form(s) a sealing region with a closed sealing edge (28), and the sealing edge (28) abuts sealingly against the in each case other one of the two end faces (46, 47), so that the armature chamber (56) is closed off in a fluid-tight manner at least over the intermediate space between electromagnet end face (46) and valve end face (47), comprising the steps of:
a. introducing the valve housing (2) into the valve-receiving part (16) at least to such an extent that the at least one sealing region abuts against the in each case other one of the two end faces (46, 47);
b. continuing the introduction at least to such an extent that the sealing region and the in each case other one of the two end faces (46, 47) form a fluid-tight connection.

9. Method according to Claim 8, **characterized in that** the end face (46, 47) situated opposite the sealing region is deformed by an action of force of the sealing region during the assembly of the electromagnet assembly (E) and the valve assembly (V) in such a way that the sealing edge (28) forms a sealing notch (48) on the oppositely situated end face (46, 47) and projects into it.

10. Method according to one of the preceding claims, **characterized in that** a pole tube (11a) of the actuator housing (11) comprises in a corner region (49) between two adjacent portions (50, 51) a concavity (53) which is arranged concentrically with respect to the longitudinal axis (L) and which is formed in a manner set back in relation to the inner surfaces of the adjacent portions (50, 51), wherein the introduction of the valve housing (2) into the valve-receiving part (16) at most occurs to such an extent that a corner region (54) of the valve housing (2) that is situated opposite the concavity (53) is arranged at a distance (A) therefrom.

## Revendications

1. Soupape électromagnétique, comprenant un sous-ensemble d'électroaimant (E) et un sous-ensemble de soupape (V) associé à celui-ci,
dans laquelle le sous-ensemble d'électroaimant (E) comprend un actionneur électromagnétique (10) pourvu d'un boîtier d'actionneur (11), une bobine (12) disposée dans le boîtier d'actionneur (11), pouvant être excitée au choix et pourvue d'un corps de bobine (12a) et d'un induit (13) pourvu d'une tige d'induit (15), disposé mobile dans un espace d'induit (56) dans le boîtier d'actionneur (11) de la soupape électromagnétique,
dans laquelle le sous-ensemble de soupape (V) comprend une soupape (1) pourvue d'un boîtier de soupape (2) et un poussoir de soupape (34) réglable dans le boîtier de soupape (2) le long d'un axe longitudinal (L) entre au moins deux positions de réglage et qui est relié de manière réglable à la tige d'induit (15), le boîtier de soupape (2) comprenant un passage (25) tourné vers le sous-ensemble d'électroaimant (E) et qui peut être au choix ouvert ou fermé par le poussoir de soupape (34),
dans laquelle le sous-ensemble d'électroaimant (E) réalise un logement de soupape (16) dans lequel le boîtier de soupape (2) est disposé au moins par endroits, et le sous-ensemble d'électroaimant (E) comprend une surface frontale d'électroaimant (46) tournée vers le sous-ensemble de soupape (V) et le sous-ensemble de soupape (V) comprend une surface frontale de soupape (47) tournée vers le sous-ensemble d'électroaimant (E),
**caractérisée en ce que** la surface frontale d'électroaimant (46) et/ou la surface frontale de soupape (47) réalise(nt) une zone d'étanchéité pourvue d'un bord d'étanchéité fermé (28), et le bord d'étanchéité (28) est appliqué contre l'autre des deux surfaces frontales (46, 47) respectivement de manière à assurer l'étanchéité de sorte que l'espace d'induit (56) est fermé de manière étanche au fluide au moins par l'intermédiaire de l'intervalle entre la surface frontale d'électroaimant (46) et la surface frontale de soupape (47).

2. Soupape électromagnétique selon la revendication 1, **caractérisée en ce que** la zone d'étanchéité est une bague d'étanchéité (26).

3. Soupape électromagnétique selon l'une quelconque des revendications précédentes, **caractérisée en ce que** la surface frontale (46, 47) opposée à la zone d'étanchéité est déformée par l'action d'une force de la zone d'étanchéité pendant le montage du sous-ensemble d'électroaimant (E) et du sous-ensemble de soupape (V) de telle sorte que le bord d'étanchéité (28) forme une encoche d'étanchéité (48) sur la surface frontale opposée (46, 47) et fait saillie dans celle-ci.

4. Soupape électromagnétique selon l'une quelconque des revendications précédentes, **caractérisée en ce que** le logement de soupape (16) présente un taraudage (18) et le boîtier de soupape (2) présente un filetage (27) correspondant au taraudage (18), et le boîtier de soupape (2) est vissé dans le logement de soupape (16).

5. Soupape électromagnétique selon l'une quelconque des revendications précédentes, **caractérisée en ce que** la zone d'étanchéité présente une section transversale triangulaire pourvue d'un bord d'étanchéité émoussé (28) .

6. Soupape électromagnétique selon l'une quelconque des revendications précédentes, **caractérisée en ce que** la surface frontale d'électroaimant (46) et/ou la surface frontale de soupape (47) est/sont réalisée(s) par un élément métallique de sorte que la zone d'étanchéité réalise un joint d'étanchéité métallique.

7. Soupape électromagnétique selon l'une quelconque des revendications précédentes, **caractérisée en ce que** la zone d'étanchéité est disposée et/ou réalisée de telle sorte qu'elle assure l'étanchéité par rapport à l'axe longitudinal (L) dans la direction axiale et/ou dans la direction radiale.

8. Procédé de fabrication d'une soupape électromagnétique comprenant un sous-ensemble d'électroaimant (E) et un sous-ensemble de soupape (V),
dans lequel le sous-ensemble d'électroaimant (E) comprend un actionneur électromagnétique (10) pourvu d'un boîtier d'actionneur (11), une bobine (12) disposée dans le boîtier d'actionneur (11), pouvant être excitée au choix et pourvue d'un corps de bobine (12a) et d'un induit (13) pourvu d'une tige d'induit (15), disposé mobile dans un espace d'induit (56) dans le boîtier d'actionneur (11) de la soupape électromagnétique,
dans lequel le sous-ensemble de soupape (V) comprend une soupape (1) pourvue d'un boîtier de soupape (2) et un poussoir de soupape (34) réglable dans le boîtier de soupape (2) le long d'un axe longitudinal (L) entre au moins deux positions de réglage et qui est relié de manière réglable à la tige d'induit (15), le boîtier de soupape (2) comprenant un passage (25) tourné vers le sous-ensemble d'électroaimant (E) et qui peut être au choix ouvert ou fermé par le poussoir de soupape (34),
dans lequel le sous-ensemble d'électroaimant (E) réalise un logement de soupape (16) dans lequel le boîtier de soupape (2) est disposé au moins par endroits, et le sous-ensemble d'électroaimant (E) comprend une surface frontale d'électroaimant (46) tournée vers le sous-ensemble de soupape (V), et le sous-sens de soupape (V) comprend une surface frontale de soupape (47) tournée vers le sous-ensemble d'électroaimant (E),
dans lequel la surface frontale d'électroaimant (46) et/ou la surface frontale de soupape (47) réalise(nt) une zone d'étanchéité pourvue d'un bord d'étanchéité fermé (28), et le bord d'étanchéité (28) est appliqué contre l'autre des deux surfaces frontales (46, 47) respectivement de manière à assurer l'étanchéité de sorte que l'espace d'induit (56) est fermé de manière étanche au fluide au moins par l'intermédiaire de l'intervalle entre la surface frontale d'électroaimant (46) et la surface frontale de soupape (47), comprenant les étapes consistant à :
a. introduire le boîtier de soupape (2) dans le logement de soupape (16) au moins jusqu'à ce que ladite au moins une zone d'étanchéité soit appliquée contre l'autre des deux surfaces frontales (46, 47) respectivement ;
b. poursuivre l'introduction au moins jusqu'à ce que la zone d'étanchéité et l'autre des deux surfaces frontales (46, 47) respectivement réalisent un assemblage étanche au fluide.

9. Procédé selon la revendication 8, **caractérisé en ce que** la surface frontale (46, 47) opposée à la zone d'étanchéité est déformée par l'action d'une force de la zone d'étanchéité pendant le montage du sous-ensemble d'électroaimant (E) et du sous-ensemble de soupape (V) de telle sorte que le bord d'étanchéité (28) forme une encoche d'étanchéité (48) sur la surface frontale opposée (46, 47) et fait saillie dans celle-ci.

10. Procédé selon l'une quelconque des revendications précédentes, **caractérisé en ce qu'**un tube polaire (11a) du boîtier d'actionneur (11) comprend dans une zone d'angle (49) entre deux sections voisines (50, 51) un bombement (53) disposé de manière concentrique par rapport à l'axe longitudinal (L) et réalisé en retrait par rapport aux surfaces intérieures des sections voisines (50, 51), dans lequel l'introduction du boîtier de soupape (2) dans le logement de soupape (16) est effectuée au maximum jusqu'à ce qu'une zone d'angle (54) opposée au bombement (53) du boîtier de soupape (2) soit disposée à une distance (A) par rapport à celui-ci.
